# FASCICULE DE BREVET EUROPEEN

(11) **EP 0 898 521 B1**
(45) Date de publication et mention de la délivrance du brevet: **04.10.2000**
(21) Numéro de dépôt: 97901673.0
(22) Date de dépôt: 24.01.1997
(51) Int. Cl.: B60Q 1/30

(54) **SYSTEME DE SIGNALISATION DE DETRESSE POUR VEHICULE AUTOMOBILE**
WARNBLINKLICHTVERFAHREN FÜR KRAFTFAHRZEUGE
HAZARD WARNING SYSTEM FOR MOTOR VEHICLES

(30) Priorité: 24.01.1996 FR 9600779
(43) Date de publication de la demande: 03.03.1999
(73) Titulaire: Safi, Mondher, 91150 Etampes (FR)
(72) Inventeur: Safi, Mondher, 91150 Etampes (FR)
(74) Mandataire: Pontet, Bernard
(86) Numéro de dépôt international: FR9700149
(87) Numéro de publication internationale: WO9727078

(56) Documents cités:
- DE-A- 3 620 599
- US-A- 4 896 137
- US-A- 5 113 175
- US-A- 5 237 306
- US-A- 5 410 294

## Description

La présente invention concerne un système de signalisation de détresse pour véhicule automobile, avec pour objectif l'amélioration de la visibilité des automobilistes en cas de panne ou d'accident sur la route, et en conséquence la sécurité routière.

Actuellement, pour signaler qu'un véhicule est en difficulté ou en panne sur une voie publique, un automobiliste dispose d'une commande de feux de détresse procurant un clignotement simultané des quatre feux clignotants disposés aux coins respectivement avant gauche, avant droit, arrière gauche et arrière droit de tout véhicule automobile.

Or l'expérience a montré qu'il existe des situations critiques dans lesquelles l'existence de ces feux de détresse ne permet pas d'éviter des accidents.

Par exemple, il faut envisager une situation critique dans laquelle le conducteur d'un premier véhicule en panne a mis en route ses feux de détresse, un second véhicule arrive derrière ce premier véhicule et a ses propres feux de détresse en panne ou son conducteur ne juge pas nécessaire de les mettre en outre, un troisième véhicule surgit derrière le second véhicule et son conducteur ne voit pas les feux de détresse du premier véhicule cachés par la carrosserie du second véhicule. Il s'ensuit un haut risque de collision entre les seconds et troisièmes véhicules pouvant d'ailleurs conduire à une suite de collisions en chaîne pour peu que la circulation soit dense et que les vitesses et distances de sécurité ne soient pas respectées par les automobilistes.

Une autre situation critique peut se rencontrer lorsqu'un véhicule se trouve en panne dans une zone de la route en dépression ou de profil concave. Il peut y avoir un risque que les feux de détresse de ce véhicule en panne, s'ils sont situés à une faible hauteur par rapport au sol, ne soient pas dans le champ de vision d'un automobiliste sur le point d'atteindre la zone ou se trouve le véhicule en panne. Cet automobiliste peut se trouver alors surpris et ne pas être mesure d'éviter une collision arrière avec le véhicule en panne.

Par ailleurs, la sécurité routières peut être gravement mise en cause dans des situations de panne d'un véhicule ayant un ou plusieurs de ses feux de détresse hors d'état. Les autres conducteurs peuvent alors être induits en erreur en interprétant à tort les indications visuelles des clignotants, ce qui peut être la cause d'accidents.

Les documents US 5113175 et US 5237306 (Adell) divulguent un système de signalisation équipant un véhicule automobile et comprenant un feu clignotant placé soit sur un coin avant, soit au niveau de la vitre arrière du véhicule, commandable manuellement ou automatiquement pour inciter les conducteurs de véhicules croisant ou suivant à ne pas rester en position "pleins phares".

Le document US 5410294 (Gold) divulgue un système de signalisation équipant un véhicule automobile et comprenant un feu clignotant arrière disposé centralement, ce feu clignotant étant commandé, manuellement ou automatiquement, pour prévenir les conducteurs suivants que le véhicule ainsi équipé est en situation de régulation de vitesse ("cruise control").

Le document US 4896137 (Lee) divulgue un système de signalisation selon le préambule de la revendication 1 comprenant un feu supplémentaire arrière disposé centralement et commandé pour prévenir les conducteurs suivants d'une manoeuvre d'arrêt et de virage ("stop and turn).

Aucun de ces documents ne décrit un système de signalisation qui assurerait une fonction générale de signalisation de détresse indépendante d'une manoeuvre de conduite particulière.

Le but de l'invention est de proposer un système de signalisation de détresse pour un véhicule automobile, qui permette une meilleure signalisation de détresse à l'attention des autres automobilistes, en supprimant notamment tout risque de confusion avec des signalisations de clignotants latéraux.

Cet objectif est atteint avec un système de signalisation de détresse pour un véhicule automobile comprenant des feux clignotants arrières respectivement gauche et droit commandables en feux de détresse, ce système de signalisation comprenant un feu de détresse supplémentaire disposé centralement à l'arrière dudit véhicule, et des moyens pour commander ce feu supplémentaire en synchronisme avec un au moins desdits feux clignotants arrières.

Suivant l'invention, ce feu supplémentaire comprend un dispositif optique de détresse de couleur sensiblement jaune ou orange, et les moyens de commande sont agencés pour ne commander ce feu supplémentaire que lorsque les deux feux clignotants arrières sont commandés simultanément en feux de détresse.

On résout ainsi les problèmes précités de visibilité des feux de détresse puisque le feu supplémentaire est disposé à une hauteur adaptée pour offrir une visibilité suffisante aux automobilistes suivants. Par ailleurs, l'adjonction d'un troisième feu de détresse permet avantageusement de pallier la défaillance éventuelle de l'un des feux clignotants arrières et de lever toute ambiguïté d'interprétation pour les automobilistes suivants.

Le feu de détresse supplémentaire mis en oeuvre dans un système de signalisation selon l'invention peut comprendre une ampoule unique de 25 W, ou bien un ensemble d'ampoules ou de diodes disposées en rangées, matrices, cercles ou disques. Le feu de détresse supplémentaire peut aussi comprendre une ampoule flash.

Dans une forme de réalisation préférée de l'invention, le feu de détresse supplémentaire est logé dans un boîtier commun central comprenant également un feu de stop central. Mais on peut également prévoir un feu de détresse supplémentaire logé dans un boîtier distinct de celui du feu de stop central.

Une forme particulière de réalisation d'un système de signalisation consiste à prévoir un boîtier commun comprenant d'une part, un bloc optique central de couleur orange ou jaune contenant le feu de détresse supplémentaire et d'autre part, un bloc optique de couleur rouge entourant le bloc optique central et contenant le feu stop.

Dans un premier mode de réalisation, les moyens de commande du feu de détresse supplémentaire sont agencés pour réaliser une fonction logique ET sur des entrées constituées des signaux de commande respectifs des feux clignotants arrières respectivement gauche et droit. Cette fonction logique ET peut être réalisée soit au moyens de transistors, soit au moyens de relais ou bien encore de circuits intégrés, par exemple à base de porte logiques NAND (NON ET).

Dans un second mode de réalisation, les moyens de commande du feu de détresse supplémentaire sont directement combinés avec des moyens de commande des feux de détresse.

D'autres particularités et avantages de l'invention apparaîtront encore dans la description ci-après. Aux dessins annexés donnés à titre d'exemples non limitatifs :
- la figure 1 est une vue arrière d'un véhicule équipé du système de signalisation selon l'invention;
- les figures 2 et 3 illustrent deux situations mettant en évidence l'intérêt du système de signalisation selon l'invention;
- la figure 4 illustre un premier mode de réalisation d'un dispositif de commande du système de signalisation selon l'invention;
- la figure 5 illustre un second mode de réalisation d'un dispositif de commande du système de signalisation selon l'invention;
- la figure 6 illustre un troisième mode de réalisation d'un dispositif de commande du système de signalisation selon l'invention;
- la figure 7 représente un premier exemple de face avant d'un boîtier combinant un feu stop et un feu de détresse supplémentaire; et
- la figure 8 représente un second exemple de face avant d'un boîtier combinant un feu de stop et un feu de détresse supplémentaire.

On va maintenant décrire plusieurs exemple de réalisation de systèmes de signalisation selon l'invention, en référence aux figures précitées.

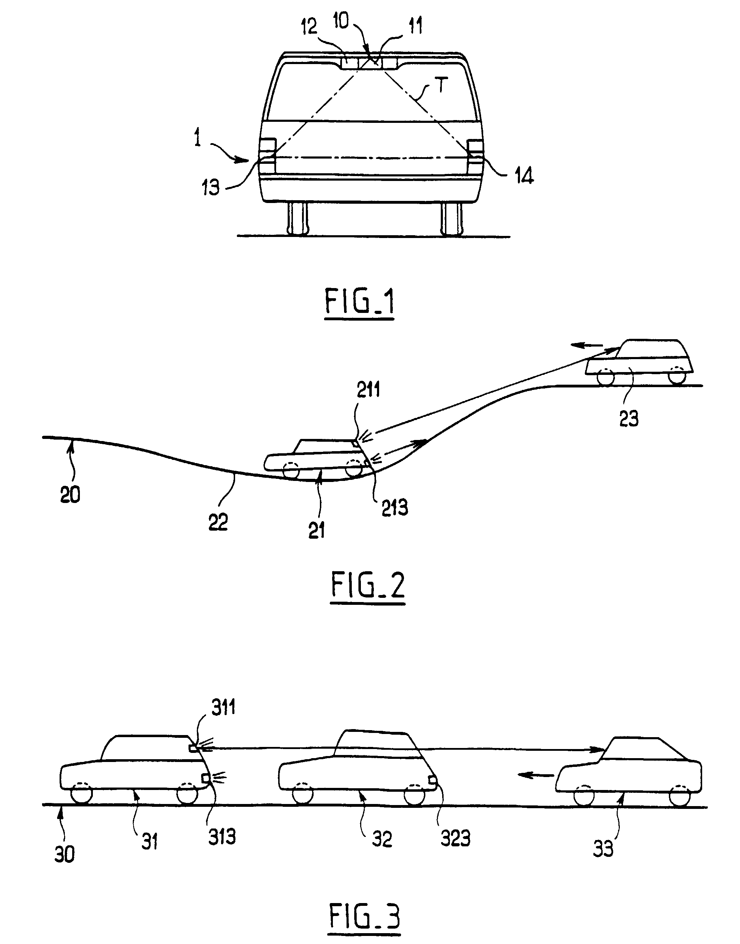

Un véhicule 1 équipé d'un système de signalisation selon l'invention comporte, en référence à la figure 1, un feu de détresse arrière supplémentaire 11 disposé au sommet supérieur d'un triangle T dont les deux autres sommets sont constitués par les deux feux clignotants arrières gauche et droit 13, 14 commandables en feux de détresse. Le feu de détresse supplémentaire 11 est de préférence logé dans un boîtier 10 contenant également un feu de stop supplémentaire 12. Le boîtier 10 peut également avantageusement contenir un circuit de commande du feu de détresse supplémentaire.

Dans la situation critique illustrée en figure 2, dans laquelle un véhicule 21 est en panne dans une partie sensiblement concave 22 d'une voie 20, l'existence d'un feu de détresse supplémentaire 211 à l'arrière de ce véhicule permet que le conducteur d'un véhicule suivant 23 soit alerté en temps utile de la présence de ce véhicule, alors que les feux de détresse inférieurs 213 ne lui sont pas encore visibles.

Dans la situation critique illustrée en figure 3, dans laquelle un premier véhicule 31 en panne sur une voie 30 et équipé du système de signalisation selon l'invention est rattrapé par un second véhicule 32 dont les feux de détresse 323 ne fonctionnent pas suivi lui-même d'un troisième véhicule 33, l'activation du feu de détresse supplémentaire 311 sur le premier véhicule 31 permet au conducteur du troisième véhicule 33 arrivant d'être alerté par ce feu de détresse supplémentaire 311 et de prendre les dispositions nécessaires en temps utile pour pouvoir éviter une collision avec le second véhicule 32. Le feu de détresse supplémentaire 311 se substitue alors avantageusement au feux de détresse inférieurs 313 qui sont occultés par la carrosserie du second véhicule et ne sont donc pas dans le champ de vision du conducteur du troisième véhicule.

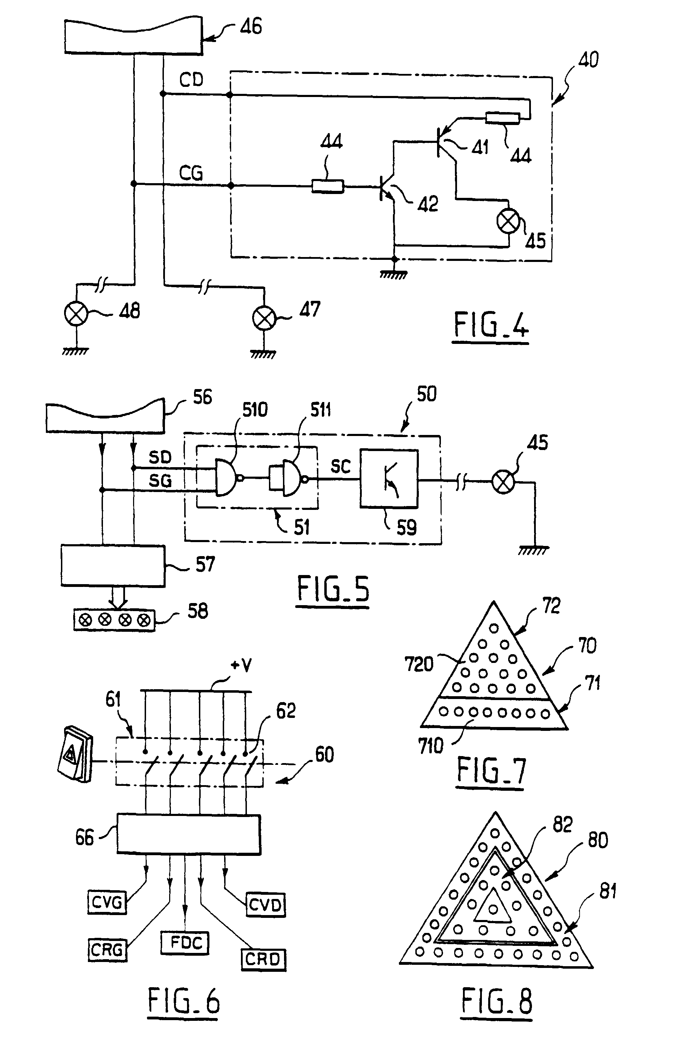

On va maintenant décrire à titre non limitatif plusieurs modes de réalisation de la commande d'un système de signalisation selon l'invention, en référence aux figures 4 à 6.

Dans un premier mode de réalisation représenté en figure 4, un circuit de commande 40, réalisé par exemple sur un circuit imprimé et inclus dans un boîtier de signalisation de détresse, comprend:
- un premier transistor 42, par exemple un transistor bipolaire de type npn, dont la base st commandée, via une résistance de limitation 44, par une ligne CG d'alimentation du clignotant arrière gauche 48 issue d'un faisceau électrique 46 préexistant sur le véhicule, et
- un second transistor 44, par exemple un transistor bipolaire de type pnp, dont la base est reliée au collecteur du premier transistor 42, l'émetteur est relié via une résistance de limitation 44 à une ligne CD d'alimentation du clignotant arrière droit 47 issue du faisceau 46, et dont le collecteur est relié au feu de détresse supplémentaire 45.

Lorsque les deux lignes d'alimentation de clignotant CD, CG sont alimentées, les deux transistors 42, 44 sont alors polarisés et saturés, et il s'ensuit que le feu de détresse supplémentaire 45 est alimentée à travers la ligne d'alimentation CD du clignotant arrière droit. Si ce clignotant arrière droit n'est plus alimenté, le transistor 44 se trouve à l'état bloqué et le feu de détresse supplémentaire 45 n'est alors plus alimenté. Il en est de même si c'est la ligne d'alimentation CG du clignotant gauche qui n'est plus alimentée. Le transistors 42, 44 sont en effet bloqués dans cette situation. Ce circuit électronique 40 réalise très simplement une fonction logique ET et garantit que le feu de détresse supplémentaire n'est alimenté qu'en synchronisme avec les deux autres clignotants arrières commandés en feux de détresse.

Dans un second mode de réalisation d'un dispositif de commande 50 représenté en figure 5, la fonction logique ET est réalisée par un ou plusieurs circuits intégrés 51, comprenant par exemple des portes logiques NAND (NON ET). Ce circuit intégré 51 reçoit en entrée des signaux logiques SD, SG issus d'un dispositif de commande 56 et commandant un dispositif d'alimentation 57 des clignotants 58 du véhicule. Le signal logique SC délivré par le circuit intégré est appliqué en entrée d'un dispositif d'alimentation 50 commandant l'alimentation électrique du feu de détresse supplémentaire 45.

Dans un troisième mode de réalisation d'un dispositif de commande 60 du système de signalisation selon l'invention, représentée en figure 6, la commande du feu de détresse supplémentaire FDC est directement couplée mécaniquement au sein d'un interrupteur de commande de détresse 61 qui comprend alors un cinquième élément interrupteur 62, en plus des quatre interrupteurs commandant les feux clignotants respectivement avant gauche, avant droit, arrière gauche, arrière droit, CVG, CRG, CVD, CRD.

On peut avantageusement réaliser, dans le cadre de la présente invention, un équipement commun de signalisation combinant un feu de détresse supplémentaire de couleur orange ou jaune et des feux de stop supplémentaires 72, 73 de couleur rouge disposés de part et d'autre de ce feu de détresse supplémentaire. A titre d'exemple non limitatif, on peut concevoir dans le cadre de la présente invention, en référence à la figure 7, un équipement 70 de forme triangulaire comprenant une base 71 faisant fonction de feu de stop supplémentaire et comportant un dispositif optique de couleur rouge pourvu d'un ensemble de diodes, et un triangle supérieur 72 faisant fonction de feu de détresse supplémentaire et comportant un dispositif optique de couleur orange ou jaune pourvu d'un ensemble de diodes. Cette forme de réalisation combine avantageusement la forme sensiblement allongée de la plupart des feux de stop supplémentaires actuels et la forme triangulaire courante du symbole de détresse.

Dans un autre mode de réalisation d'un équipement commun 80 combinant un feu de détresse supplémentaire et un feu de stop, en référence à la figure 8, on peut concevoir une forme globale triangulaire incluant des bandes latérales 81 faisant fonction de feu stop et un triangle central 82 faisant fonction de feu de détresse. Les bandes latérales de feu de stop et le triangle de détresse peuvent avantageusement comporter une pluralité de diodes réalisées et montées selon des techniques connues.

Bien sûr, l'invention n'est pas limitée aux exemples qui viennent d'être décrits et de nombreux aménagements peuvent être apportés à ces exemples sans sortir du cadre de les revendications. On peut ainsi prévoir une grande variété d'agencements et de géométries du feu de détresse supplémentaire. Par ailleurs, le dispositif de commande du système de signalisation selon l'invention peut être réalisé de bien d'autres façons que celles qui viennent d'être décrites.

## Revendications

1. Système de signalisation de détresse pour un véhicule automobile (1) comprenant des feux clignotants arrières respectivement gauche et droit (13, 14) commandables en feux de détresse, ce système comprenant un feu supplémentaire (11) disposé centralement à l'arrière dudit véhicule (1) et des moyens (40) pour commander ce feu supplémentaire (11) en synchronisme avec un au moins desdits feux clignotants arrières (13, 14), caractérisé en ce que ce feu supplémentaire (11) comprend un dispositif optique de détresse de couleur sensiblement jaune ou orange et en ce que les moyens de commande (40) sont agencés pour ne commander ce feu supplémentaire (11) que lorsque les deux feux clignotants arrières (13, 14) sont commandés simultanément en feux de détresse.

2. Système de signalisation selon la revendication 1, caractérisé en ce que le feu de détresse supplémentaire (11) est logé dans un boîtier central (10).

3. système de signalisation selon la revendication 2, pour un véhicule automobile équipé d'un feu de stop supplémentaire (12) comprenant un dispositif optique de couleur sensiblement rouge et disposé centralement à l'arrière dudit véhicule (1), caractérisé en ce que le feu de détresse supplémentaire (11) et le feu de stop supplémentaire (12) sont logés dans un boîtier central commun (10).

4. Système de signalisation selon l'une des revendications 2 ou 3, mis en oeuvre dans un véhicule pourvu d'un feu supplémentaire de stop, caractérisé en ce que les feux supplémentaires respectivement de détresse et de stop sont superposés.

5. Système de signalisation selon la revendication 4, caractérisé en ce que le boîtier central (70) présente une face avant de forme sensiblement triangulaire et comporte une base (71) faisant fonction de feu de stop et un triangle supérieur (72) faisant fonction de feu de détresse supplémentaire.

6. Système de signalisation selon l'une des revendications 2 ou 3, mis en oeuvre dans un véhicule (1) pourvu d'un feu supplémentaire de stop, caractérisé en ce que le feu de stop supplémentaire (81) entoure le feu de détresse supplémentaire (82).

7. Système de signalisation selon la revendication 6, caractérisé en ce que la face avant du boîtier central (80) est de forme sensiblement triangulaire.

8. Système de signalisation selon l'une des revendications 6 ou 7, caractérisé en ce que le feu de détresse supplémentaire (72) est de forme sensiblement triangulaire.

9. Système de signalisation selon l'une quelconque des revendications précédentes, caractérisé en ce que les moyens de commande (40) comprennent des moyens pour réaliser une fonction logique ET entre des signaux de commande respectifs des feux clignotants arrières respectivement gauche et droit (48, 47).

10. Système de signalisation selon la revendication 9, caractérisé en ce que les moyens de commande comprennent des transistors de commutation (41, 42) agencés pour réaliser la fonction logique ET entre des signaux de commande respectifs des feux clignotants arrières respectivement gauche et droit (48, 47).

11. Système de signalisation selon la revendication 9, caractérisé en ce que les moyens de commande (50) comprennent un circuit intégré logique (51).

12. Système de signalisation selon l'une quelconque des revendications 1 à 8, caractérisé en ce que les moyens de commande (60) du feu de détresse supplémentaire sont directement couplés avec des moyens de commande des feux de détresse, au sein d'un interrupteur de commande de détresse (61).

## Patentansprüche

1. Notsignalisierungssystem für ein Kraftfahrzeug (1), das hintere Blinkleuchten (13, 14) aufweist, die links bzw. rechts angeordnet sind und als Notleuchten ansteuerbar sind, mit einer mittig am Heck des Kraftfahrzeugs (1) angeordneten Zusatzleuchte (11) und einer Einrichtung (40) zur Steuerung der Zusatzleuchte (11) synchron mit wenigstens einer der genannten hinteren Blinkleuchten (13, 14) dadurch gekennzeichnet, dass die Zusatzleuchte (11) eine optische Notanordnung in im wesentlichen gelber oder orangener Farbe aufweist und dass die Steuereinrichtung (40) so eingerichtet ist, dass die Zusatzleuchte (11) nur angesteuert wird, wenn die beiden hinteren Blinkleuchten (13, 14) gleichzeitig als Notleuchten angesteuert werden.

2. Signalisierungssystem nach Anspruch 1, dadurch gekennzeichnet, dass die zusätzliche Notleuchte (11) in einem mittigen Gehäuse (10) untergebracht ist.

3. Signalisierungssystem nach Anspruch 2 für ein Kraftfahrzeug, das mit einer zusätzlichen Bremsleuchte (12) ausgestattet ist, die eine optische Anordnung in im wesentlichen roter Farbe aufweist und zentral am Heck des Kraftfahrzeugs (1) angeordnet ist, dadurch gekennzeichnet, dass die zusätzliche Notleuchte (11) und die zusätzliche Bremsleuchte (12) in einem gemeinsamen zentralen Gehäuse (10) untergebracht sind.

4. Signalisierungssystem nach einem der Ansprüche 2 oder 3 an einem Kraftfahrzeug, das mit einer zusätzlichen Bremsleuchte versehen ist, dadurch gekennzeichnet, dass die Bremszusatzleuchte und die Notzusatzleuchte einander überlagernd angeordnet sind.

5. Signalisierungssystem nach Anspruch 4, dadurch gekennzeichnet, dass das mittige Gehäuse (70) eine Fläche mit im wesentlichen dreieckiger Form aufweist, von der eine Basis (71) die Funktion der Bremsleuchte und ein oberes Dreieck (72) die Funktion der zusätzlichen Notleuchte ausübt.

6. Signalisierungssystem nach einem der Ansprüche 2 oder 3 an einem Kraftfahrzeug, das mit einer zusätzlichen Bremsleuchte versehen ist, dadurch gekennzeichnet, dass die zusätzliche Bremsleuchte (81) die zusätzliche Notleuchte (82) einrahmt.

7. Signalisierungssystem nach Anspruch 6, dadurch gekennzeichnet, dass die Vorderfläche des zentralen Gehäuses (80) eine im wesentlichen dreieckige Form aufweist.

8. Signalisierungssystem nach einem der Ansprüche 6 oder 7, dadurch gekennzeichnet, dass die zusätzliche Notleuchte (72) im wesentlichen eine dreieckige Form aufweist.

9. Signalisierungssystem nach einem der vorhergehenden Ansprüche, dadurch gekennzeichnet, dass die Steuereinrichtung (40) eine Einrichtung zur Realisierung einer UND-Funktion zwischen den jeweiligen Steuersignalen für die hinteren, links und rechts angeordneten Blinkleuchten (48, 97) aufweist.

10. Signalisierungssystem nach Anspruch 9, dadurch gekennzeichnet, dass die Steuereinrichtung Schalttransistoren (41, 42) aufweist, die zur Realisierung einer UND-Funktion zwischen den jeweiligen Steuersignalen für die hinteren, links und rechts angeordneten Blinkleuchten (48, 47) angeordnet sind.

11. Signalisierungssystem nach Anspruch 9, dadurch gekennzeichnet, dass die Steuereinrichtung (50) einen integrierten Logikkreis (51) aufweist.

12. Signalisierungssystem nach einem der Ansprüche 1 bis 8, dadurch gekennzeichnet, dass die Steuereinrichtung (60) für die zusätzliche Notleuchte direkt mit einer Steuereinrichtung für die Notleuchten innerhalb einer Notleuchten-Steuerschalteinrichtung (61) verbunden ist.

## Claims

1. Hazard warning system for a motor vehicle (1) comprising respectively left and right rear flashing lights (13, 14) controllable as warning lights, said system comprising an additional light (11) centrally located in the back of said vehicle (1) and means (40) for controlling said additional light (11) in synchronism with at least one of said rear flashing lights (13, 14), characterized in that said additional light (11) comprises a substantially yellow or orange-colored warning optical device and in that the control means (40) are arranged for controlling said additional light (11) only when the two rear flashing lights (13, 14) are simultaneously controlled as warning lights.

2. Warning system according to claim 1, characterized in that the additional warning light (11) is housed in a central box (10).

3. warning system according to claim 2, for a motor vehicle equipped with an additional stop light (12) comprising a substantially red-colored optical device and centrally located in the back of said vehicle (1), characterized in that the additional warning light (11) and the additional stop light (12) are housed in a common central box (10).

4. Warning system according to one of claims 2 or 3, implemented in a vehicle provided with an additional stop light, characterized in that the respective warning and stop additional lights are stacked.

5. Warning system according to claim 4, characterized in that the central box (70) has a substantially triangular-shaped front face and includes a base (71) used as a stop light and a upper triangle (72) used as an additional warning light.

6. Warning system according to one of claims 2 or 3, implemented in a vehicle (1) provided with an additional stop light, characterized in that the additional stop light (81) surrounds the additional warning light (82).

7. Warning system according to claim 6, characterized in that the front face of the central box (80) is substantially triangular-shaped.

8. Warning system according to one of claims 6 or 7, characterized in that the additional warning light (72) is substantially triangular-shaped.

9. Warning system according to any of preceding claims, characterized in that the control means (40) comprise means for carrying out a logical function AND between respective control signals of the respectively left and right rear flashing lights (48, 47).

10. Warning system according to claim 9, characterized in that the control means comprise commutation transistors (41, 42) arranged for carrying out the logical function AND between respective control signals of the respectively left and right rear flashing lights (48, 47).

11. Warning system according to claim 9, characterized in that the control means (50) comprise a logical integrated circuit (51).

12. Warning system according to any of claims 1 to 8, characterized in that the means (60) for controlling the additional warning light are directly coupled with means for controlling the warning lights, within a warning control switch (61).
